Europäisches Patentamt

European Patent Office

Office européen des brevets

(19)

(11) Numéro de publication : **0 133 682**
**B1**

(12)

# FASCICULE DE BREVET EUROPÉEN

(45) Date de publication du fascicule du brevet :
25.03.87

(51) Int. Cl.⁴ : **H 01 M   4/58**, H 01 M   6/16

(21) Numéro de dépôt : **84109044.2**

(22) Date de dépôt : **31.07.84**

(54) **Matière active positive pour générateurs électrochimiques et générateurs électrochimiques en faisant application.**

(30) Priorité : **03.08.83 FR 8312809**

(43) Date de publication de la demande :
**06.03.85 Bulletin 85/10**

(45) Mention de la délivrance du brevet :
**25.03.87 Bulletin 87/13**

(84) Etats contractants désignés :
**AT BE CH DE FR GB IT LI LU NL SE**

(56) Documents cités :
**EP-A- 0 021 358**
**EP-A- 0 068 307**
**US-A- 3 361 596**
**JOURNAL OF THE AMERICAN CERAMIC SOCIETY,**
**vol. 45, no. 8, 1 août 1962, pages 355-360; E.M. LEVIN**
**et al.: "The system Bi2O3-B2O3"**

(73) Titulaire : **Société Anonyme dite SAFT**
**156, avenue de Metz**
**F-93230 Romainville (FR)**

(72) Inventeur : **Broussely, Michel**
**53, avenue de Poitiers**
**F-86240 Liguge (FR)**
Inventeur : **Lecerf, André**
**24, avenue Le Brix**
**F-35740 Pace (FR)**

(74) Mandataire : **Weinmiller, Jürgen et al**
**Lennéstrasse 9**
**D-8133 Feldafing (DE)**

EP 0 133 682 B1

## Description

La présente invention concerne des générateurs électrochimiques caractérisés par leur matière active positive, et notamment les générateurs à grande énergie spécifique dont l'électrode négative est à base d'un métal alcalin ou d'un alliage de métal alcalin.

Le problème est d'obtenir des générateurs électrochimiques présentant de bonnes caractéristiques de conservation, dont la tension de décharge se situe autour de 1,5 volts, et qui présentent un long palier de décharge à ce niveau.

Les applications visées sont notamment l'alimentation des montres électroniques.

Dans ce domaine, les piles utilisant le couple zinc-oxyde d'argent ne présentent pas des caractéristiques de conservation suffisantes. Par contre, les piles ayant comme matière active négative un métal alcalin, tel que le lithium, répondent à cet impératif.

Le but de l'invention est donc de réaliser une pile de ce type présentant un palier de décharge encore plus intéressant que celui des piles connues pour les applications précitées.

La présente invention a pour objet un générateur électrochimique, caractérisé par le fait que sa matière active positive est constituée par un borate anhydre de bismuth de formule $Bi_4B_2O_9$.

Elle a également pour objet des générateurs comportant une telle matière active positive et comme matière active négative un métal alcalin ou un alliage de métal alcalin.

Selon un premier mode de réalisation un tel générateur a un électrolyte non aqueux, liquide à température et pression ordinaires. Les solvants d'électrolyte peuvent être soit des esters, comme le carbonate de propylène ou d'éthylène, soit des éthers cycliques comme le tétrahydrofuranne et le dioxolanne, soit des éthers à chaîne droite comme les glymes et en particulier le diméthoxyéthane, soit leurs mélanges. Le soluté est de préférence du perchlorate de lithium, mais peut être aussi du trifluorométhane sulfonate de lithium, du tétrafluoroborate de lithium ou de l'hexafluoroarséniate de lithium, entre autres.

Selon un second mode de réalisation un générateur selon l'invention comporte un électrolyte solide.

Tous les matériaux connus actuellement peuvent être utilisés, qu'ils soient des composés cristallisés comme l'iodure de lithium, dispersé ou non sur alumine, des polymères organiques conducteurs comme le polyoxyde d'éthylène contenant un sel de lithium, des matériaux vitreux à base de sulfures ou d'oxydes.

L'invention sera mieux comprise à l'aide des exemples suivants, décrits en relation avec les dessins annexés, dans lesquels :

la figure 1 représente schématiquement une pile selon l'invention à électrolyte liquide,

la figure 2 représente la courbe moyenne de décharge sous 15 kΩ de la pile de la figure 1, et la courbe d'une pile de l'art antérieur,

la figure 3 représente la courbe moyenne de décharge sous 5 kΩ d'une pile selon l'invention identique à celle de la figure 2,

la figure 4 représente schématiquement en coupe une pile selon l'invention à électrolyte solide,

la figure 5 représente la courbe moyenne de décharge sous 15 kΩ à 110 °C de la pile de la figure 4.

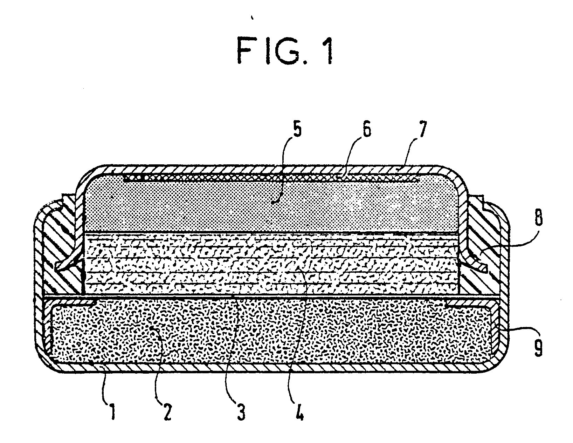

Des piles selon l'invention ont été réalisées sous la forme de la pile bouton à électrolyte organique liquide schématisée sur la figure 1.

Sur cette figure, la référence 1 désigne une coupelle en acier inoxydable qui contient la masse active positive 2, maintenue par un anneau métallique 9. Une coupelle négative 7 également en acier inoxydable contient la matière active négative 5 qui est du lithium, incrustée sur une grille-support 6 en nickel, soudée à la coupelle 7. Les matières actives sont séparées par un séparateur « barrière » 3 en polypropylène et un séparateur poreux cellulosique 4 imbibé d'électrolyte. Un joint 8 en polypropylène isole des deux coupelles et assure l'étanchéité de la pile.

La matière active positive selon l'invention, du borate de bismuth anhydre $Bi_4B_2O_9$, a été préparée selon une méthode connue décrite par Levin et McDaniel dans le « Journal of American Ceramic Society » 45, 8, p. 355 (1962). Elle consiste à chauffer à 670 °C un mélange d'oxyde de bismuth $Bi_2O_3$ et d'oxyde de bore $B_3O_3$ en proportions stœchiométriques.

Dans une expérience type, 7,47 g de $B_2O_3$ ont été ajoutés à 100 g de $Bi_2O_3$. Le mélange a été placé dans un broyeur à boulets pendant une demi-heure. Le mélange est ensuite versé dans un creuset en silico-alumineux et légèrement tassé. Le creuset est ensuite porté pendant deux heures dans un four à 670 °C, à l'air. Le produit résultant, de formule $Bi_4B_2O_9$ est broyé à la granulométrie désirée. La masse spécifique du produit obtenu a été mesurée et trouvée égale à 8,14 g/cm³, la capacité volumique du matériau étant 2,60 Ah/cm³.

Pour réaliser la masse active 2 on a préparé du borate anhydre de bismuth comme décrit ci-dessus, et on a réalisé un mélange de 70 % en poids de ce borate et 30 % en poids de poudre de plomb.

300 mg de mélange sont comprimés dans la coupelle positive 1 pour former l'électrode positive.

L'anode est constituée par un disque de 16 mg de lithium.

L'électrolyte utilisé par cette pile est une solution à 2 moles/litre de perchlorate de lithium dans le dioxolanne.

Les piles réalisées ont un diamètre de 11,6 mm et une hauteur de 2,1 mm.

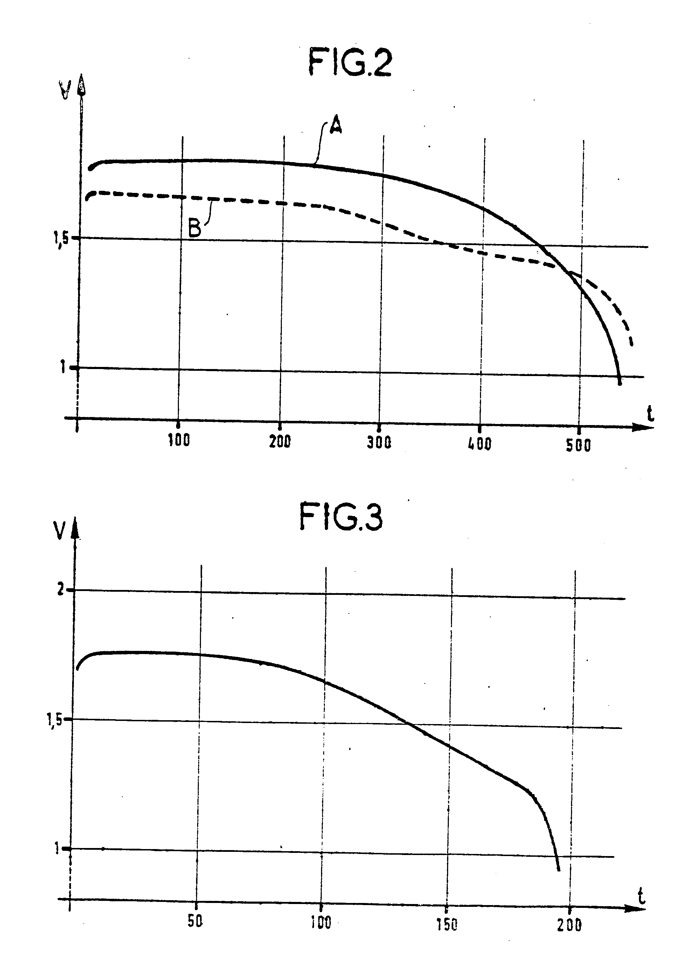

Des piles ainsi constituées ont été déchargées sous une résistance de 15 kΩ. La courbe de

décharge moyenne A obtenue est représentée sur la figure 2, où le temps de décharge t, en heures, a été porté en abscisse, et la tension V, en volts, en ordonnée.

Comme on le voit la tension de décharge se situe dans un domaine de 1,8 à 1,2 V. La capacité obtenue, de 60 mAh, soit un rendement de 97 %, est supérieure à celle généralement obtenue pour des piles de cette dimension au zinc/oxyde d'argent.

Sur cette même figure 2, la courbe B représente la décharge d'une pile au lithium de mêmes dimensions, utilisant comme matière active cathodique l'oxyde mixte de plomb et de bismuth $Bi_2Pb_2O_5$ selon le brevet français n° 77 30946 publié sous le n° 2.406.312.

On peut ainsi mesurer le gain obtenu sur la tension de palier avec le nouveau matériau décrit ici.

De plus cette capacité peut être restituée à un régime plus sévère, comme le montre la figure 3 où est reportée une courbe de décharge sous une résistance de 5 kΩ.

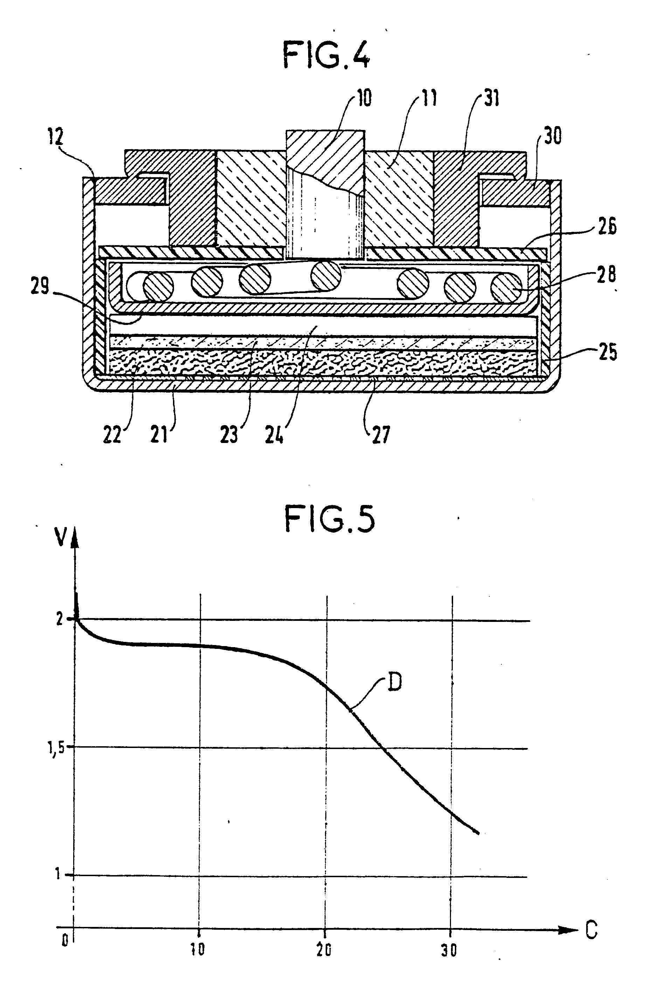

Selon une autre variante conforme à l'invention des piles ont été réalisées avec un électrolyte solide de formule 0.18 $P_2S_5$, 0.37 $Li_2S$, 0.45 LiI décrit dans les brevets français n° 81 11902 et 81 11903 publiés respectivement sous les numéros 2.508.239 et 2.508.240. Les piles sont réalisées selon le schéma de la figure 4.

La masse cathodique 22 est réalisée en mélangeant 65 % en poids de $Bi_4B_2O_9$, 30 % en poids d'électrolyte et 5 % en poids de graphite ; 150 mg de mélange sont comprimés à 2,5 T/cm² dans un moule cylindrique de diamètre 10,7 mm de façon à lui donner une forme de pastille ; 150 mg d'électrolyte 23 sont comprimés de la même manière.

Une pastille de 10,5 g de lithium 24 est accolée à la couche d'électrolyte.

L'ensemble est placé dans une coupelle d'acier inoxydable 21, contenant une bague isolante 25 en polypropylène, une rondelle isolante 26 en PTFE, et une grille collectrice 27 en acier inoxydable. Les électrodes sont maintenues plaquées les unes contre les autres par un ressort 28. La pression du ressort s'exerce par l'intermédiaire d'une coupelle d'acier inoxydable 29. La coupelle positive 21 est fermée par un couvercle 30 et une pièce 31. L'ensemble ressort 28/coupelle 29 constitue le collecteur anodique, et est relié par une soudure au pôle métallique négatif 10. Ce dernier est isolé de la coupelle positive par un scellement de verre 11. La fermeture étanche de la pile est assurée par une soudure laser sur la jonction métal/métal 12.

Une pile selon cet exemple a été déchargée à 110 °C sous 15 kΩ. La courbe de décharge D, obtenue est reportée sur la figure 5 (capacité C en mAh en abscisses et tension U en volt en ordonnées). On remarquera sur cette figure que la capacité faradique cathodique calculée de la pile, 32 mAh, a été réellement obtenue, à une tension supérieure à 1 V.

Bien entendu, les piles des exemples qui précèdent sont des piles d'essai, et leur réalisation peut être améliorée, en particulier en recherchant le meilleur équilibre entre les quantités des matériaux cathodique et anodique.

**Revendications**

1. Générateur électrochimique, caractérisé par le fait que sa matière active positive est constituée par un borate anhydre de formule $Bi_4B_2O_9$.

2. Générateur électrochimique selon la revendication 1, caractérisé par le fait que son électrode négative (5) est un métal alcalin, ou un alliage de métal alcalin.

3. Générateur électrochimique selon la revendication 2, caractérisé par le fait que le métal alcalin est le lithium.

4. Générateur électrochimique selon l'une des revendications 2 et 3, caractérisé par le fait que son électrolyte est un électrolyte solide (23).

5. Générateur électrochimique selon l'une des revendications 2 et 3, caractérisé par le fait que son électrolyte est une solution liquide à la température ambiante, dont le solvant est un composé aprotique.

6. Générateur électrochimique selon l'une des revendications 2, 3 et 5, caractérisé par le fait que le solvant est choisi parmi les esters et les éthers cycliques et à chaîne droite, et leurs mélanges.

7. Générateur électrochimique selon la revendication 6, caractérisé par le fait que les esters sont le carbonate de propylène et d'éthylène, que les éthers cycliques sont le tétrahydrofuranne et le dioxolanne, et les éthers à chaîne droite sont le 1.2 diméthoxyéthane et les autres glymes.

8. Générateur électrochimique selon l'une des revendications 5 et 7, caractérisé par le fait que le soluté de l'électrolyte est choisi parmi le perchlorate de lithium, le tétrafluoroborate de lithium, le trifluorométhane sulfonate de lithium et l'hexafluoro-arséniate de lithium.

**Claims**

1. An electrochemical generator, characterized in that its positive active material is constituted by an anhydrous borate having the formula $Bi_4B_2O_9$.

2. An electrochemical generator according to claim 1, characterized in that its negative electrode (5) is an alkali metal or an alkali metal alloy.

3. An electrochemical generator according to claim 2, characterized in that the alkali metal is lithium.

4. An electrochemical generator according to one of claims 2 and 3, characterized in that its electrolyte is a solid electrolyte (23).

5. An electrochemical generator according to one of claims 2 and 3, characterized in that its electrolyte is a solution which is liquid at ambient temperature and the solvent of which is an aprotic compound.

6. An electrochemical generator according to one of claims 2, 3 and 5, characterized in that the solvant is chosen amongst the esters and cyclic and straight chain ethers, and their mixtures.

7. An electrochemical generator according to claim 6, characterized in that the esters are propylene and ethylene carbonate, that the cyclic ethers are tetrahydrofuran and dioxolane, and the straight chain ethers are 1.2-dimethoxyethane and the other glymes.

8. An electrochemical generator according to one of claims 5 and 7, characterized in that the electrolyte solute is chosen amongst lithium perchlorate, lithium tetrafluoroborate, lithium trifluoromethane sulfonate and lithium hexafluoroarsenate.

## Patentansprüche

1. Elektrochemischer Generator, dadurch gekennzeichnet, daß sein positives aktives Material aus einem wasserfreien Borat der Formel $Bi_4B_2O_9$ besteht.

2. Elektrochemischer Generator nach Anspruch 1, dadurch gekennzeichnet, daß seine negative Elektrode (5) ein Alkalimetall oder eine Alkalimetallegierung ist.

3. Elektrochemischer Generator nach Anspruch 2, dadurch gekennzeichnet, daß das Alkalimetall Lithium ist.

4. Elektrochemischer Generator nach einem der Ansprüche 2 und 3, dadurch gekennzeichnet, daß sein Elektrolyt ein fester Elektrolyt (23) ist.

5. Elektrochemischer Generator nach einem der Ansprüche 2 und 3, dadurch gekennzeichnet, daß sein Elektrolyt eine bei Umgebungstemperatur flüssige Lösung ist, deren Lösungsmittel eine aprotische Verbindung ist.

6. Elektrochemischer Generator nach einem der Ansprüche 2, 3 und 5, dadurch gekennzeichnet, daß das Lösungsmittel aus den Estern und den zyklischen Äthern und den Äthern mit gerader Kette sowie ihren Mischungen ausgewählt wird.

7. Elektrochemischer Generator nach Anspruch 6, dadurch gekennzeichnet, daß die Ester Propylen- und Äthylencarbonat sind, daß die zyklischen Äther Tetrahydrofuran und Dioxolan und die Äther mit gerader Kette 1.2-Dimethoxyethan und die anderen Glyme sind.

8. Elektrochemischer Generator nach einem der Ansprüche 5 und 7, dadurch gekennzeichnet, daß der gelöste Stoff des Elektrolyten aus Lithiumperchlorat, Lithiumtetrafluorborat, Lithiumtrifluormethansulfonat und Lithiumhexafluorarseniat ausgewählt wird.

# FIG. 1

# FIG.2

# FIG.3

# FIG.4

# FIG.5